# FASCICULE DE BREVET EUROPEEN

(11) **EP 3 558 716 B1**
(45) Date de publication et mention de la délivrance du brevet: **21.10.2020**
(21) Numéro de dépôt: 17828958.3
(22) Date de dépôt: 18.12.2017
(51) Int. Cl.: B60C 11/03

(54) **BANDE DE ROULEMENT DE PNEUMATIQUE POUR VÉHICULE AGRICOLE**
LAUFFLÄCHE FÜR EINEN REIFEN EINES LANDWIRTSCHAFTLICHEN FAHRZEUGS
TREAD FOR AN AGRICULTURAL VEHICLE TYRE

(30) Priorité: 20.12.2016 FR 1662819
(43) Date de publication de la demande: 30.10.2019
(73) Titulaire: Compagnie Générale des Etablissements Michelin, 63000 Clermont-Ferrand (FR)
(72) Inventeur: CHARASSON, Bruno, 63040 Clermont-Ferrand Cedex 9 (FR); GANDILLET, Marc, 63040 Clermont-Ferrand Cedex 9 (FR)
(74) Mandataire: Millanvois, Patrick Jacques Jean
(86) Numéro de dépôt international: PCT/FR2017/053643
(87) Numéro de publication internationale: WO 2018/115676

(56) Documents cités:
- FR-A1- 2 382 348

## Description

La présente invention a pour objet un pneumatique pour véhicule agricole, tel qu'un tracteur agricole ou un véhicule agro-industriel, et concerne plus particulièrement la bande de roulement d'un tel pneumatique.

Dans ce qui suit, les directions circonférentielle, axiale et radiale désignent respectivement une direction tangente à la surface de roulement et orientée selon le sens de rotation du pneumatique, une direction parallèle à l'axe de rotation du pneumatique et une direction perpendiculaire à l'axe de rotation du pneumatique.

Un pneumatique pour véhicule agricole est destiné à rouler sur divers types de sols tels que la terre plus ou moins compacte des champs, les chemins non goudronnés d'accès aux champs et les surfaces goudronnées des routes. Compte tenu de la diversité de l'usage, en champ et sur route, un pneumatique pour véhicule agricole, et en particulier sa bande de roulement, doit présenter un compromis de performances entre, de façon non exhaustive, la traction en champ, la résistance aux arrachements, la résistance à l'usure sur route, la résistance au roulement, le confort vibratoire sur route.

Pour satisfaire cet ensemble de performances, la bande de roulement d'un pneumatique pour véhicule agricole comprend généralement une pluralité de barrettes, éléments en relief s'étendant radialement à partir d'une surface de fond jusqu'à la surface de roulement.

Une barrette a généralement une forme globalement parallélépipédique allongée, constituée d'au moins une portion rectiligne ou curviligne, et est séparée des barrettes adjacentes par des sillons. Une barrette peut être constituée d'une succession de portions rectilignes, telle que décrite dans les documents US3603370, US4383567, EP795427 ou avoir une forme curviligne, telle que présentée dans les documents US4446902, EP903249, EP1831034.

Dans ce qui suit, on appelle nez de barrette, une portion de barrette axialement intérieure, et aile de barrette, une portion de barrette axialement extérieure.

Selon la direction radiale, une barrette s'étend à partir de la surface de fond jusqu'à la surface de roulement, la distance radiale entre la surface de fond et la surface de roulement définissant la hauteur de barrette. La face radialement extérieure de la barrette, appartenant à la surface de roulement, qui entre en contact avec le sol, lors du passage de la barrette dans la surface de contact du pneumatique avec le sol, est appelée face de contact de la barrette. On appelle pied de barrette la portion de barrette au voisinage de la surface de fond.

Selon la direction axiale, une barrette s'étend vers l'intérieur à partir d'une extrémité axiale de la bande de roulement. Généralement, une barrette s'étend axialement vers l'intérieur à partir d'une face d'extrémité axialement extérieure, positionnée au niveau de l'aile de barrette, jusqu'à une face d'extrémité axialement intérieure, positionnée au niveau du nez de barrette, plus proche du plan équatorial du pneumatique. Par définition, le plan équatorial est un plan circonférentiel, perpendiculaire à l'axe de rotation du pneumatique et passant par le milieu de sa bande de roulement.

Selon la direction circonférentielle, une barrette s'étend, selon un sens de rotation préférentiel du pneumatique, entre une face d'attaque et une face de fuite. Par sens de rotation préférentiel, on entend le sens de rotation préconisé par le fabricant du pneumatique pour une utilisation optimale du pneumatique. A titre d'exemple, dans le cas d'une bande de roulement comprenant deux rangées de barrettes en V ou en chevrons, le pneumatique a un sens de rotation préférentiel selon la pointe des chevrons. La face d'attaque est, par définition, la face dont l'arête radialement extérieure ou arête d'attaque entre en premier en contact avec le sol, lors du passage de la barrette dans la surface de contact du pneumatique avec le sol, au cours de la rotation du pneumatique. La face de fuite est, par définition, la face dont l'arête radialement extérieure ou arête de fuite entre en dernier en contact avec le sol, lors du passage de la barrette dans la surface de contact du pneumatique avec le sol, au cours de la rotation du pneumatique. Selon le sens de rotation, la face d'attaque est dite en avant par rapport à la face de fuite.

Une barrette a usuellement un angle d'inclinaison moyen, par rapport à la direction circonférentielle, proche de 45°, l'angle d'inclinaison moyen étant l'angle de la droite passant par les extrémités axiales de la barrette. En effet, cet angle d'inclinaison moyen permet en particulier un compromis entre la traction en champ et le confort vibratoire. La traction en champ est d'autant meilleure que la barrette est radiale, c'est-à-dire que son angle d'inclinaison moyen est proche de 90°, alors que le confort vibratoire est d'autant meilleur que la barrette est longitudinale, c'est-à-dire que son angle d'inclinaison moyen est proche de 0°. Il est notoire que la traction en champ est plus fortement déterminée par l'angle de la barrette au niveau de l'épaule, ce qui a amené certains concepteurs de pneumatiques à proposer une forme de barrette très incurvée, conduisant à une barrette sensiblement radiale à l'épaule et sensiblement longitudinale au milieu de la bande de roulement.

La bande de roulement d'un pneumatique pour véhicule agricole comprend usuellement deux rangées de barrettes telles que précédemment décrites. Cette distribution de barrettes inclinées par rapport à la direction circonférentielle confère à la bande de roulement une forme en V couramment dénommée motif en chevrons. Les deux rangées de barrettes présentent une symétrie par rapport au plan équatorial du pneumatique, avec le plus souvent un décalage circonférentiel entre les deux rangées de barrettes, résultant d'une rotation autour de l'axe du pneumatique d'une moitié de la bande de roulement par rapport à l'autre moitié de la bande de roulement. En outre, les barrettes peuvent être continues ou discontinues, et réparties circonférentiellement avec un pas constant ou variable.

Diverses conceptions de bande de roulement à barrettes ont été proposées, selon l'amélioration de performances recherchée, comme le montrent, à titre d'exemples, les documents cités ci-après. Le document US4131148 présente une surface de fond à facettes pour améliorer la traction en champ et l'auto nettoyage de la bande de roulement. Le document US4611647 propose une barrette avec une face d'attaque dont le profil circonférentiel, selon un plan circonférentiel, parallèle au plan équatorial, est convexe et curviligne, afin d'améliorer la résistance à l'usure, l'efficacité en traction et la durée de vie. Le document US5010935 décrit une barrette dont la face d'attaque à un profil circonférentiel concave à double pente, pour une meilleure traction en champ et une meilleure résistance à l'arrachement. Le document JP11115417 décrit une barrette dont la face d'attaque à un profil circonférentiel convexe à double pente, pour améliorer la traction en champ et l'auto nettoyage de la bande de roulement.

L'amélioration de la traction en champ est donc une préoccupation constante du concepteur de pneumatique pour véhicule agricole, comme le montrent les documents de brevet de l'état technique précédemment cités.

De plus, concernant le fonctionnement en champ, une autre préoccupation importante du concepteur de pneumatique est l'amélioration de la résistance des barrettes aux agressions, et plus particulièrement aux agressions par les chaumes résiduels (« stubble ») dans les champs après la récolte. Un chaume est une portion de tige de plante dont l'extrémité libre est généralement acérée. L'extrémité libre acérée d'un chaume, qui entre en contact avec la face d'attaque d'une barrette, est susceptible de la perforer localement et superficiellement, ce qui entraîne un arrachement local du matériau élastomérique constitutif de la barrette. Les agressions répétées des faces d'attaque des barrettes par des chaumes peuvent provoquer une dégradation importante de l'aspect des barrettes, voire des arrachements notamment au niveau des extrémités axialement intérieures des barrettes, ou nez de barrettes. Ces dégradations sont un motif potentiel de réclamation de la part des utilisateurs, pouvant nécessiter le remplacement du pneumatique.

La présente invention a pour objectif d'améliorer la traction en champ, tout en désensibilisant les faces d'attaque des barrettes de bande de roulement d'un pneumatique pour véhicule agricole, aux agressions par des chaumes résiduels après récolte, et donc en réduisant le risque d'arrachement en particulier au niveau des nez des barrettes.

Ce but a été atteint selon l'invention par un pneumatique pour véhicule agricole comprenant:
- une bande de roulement constituée de barrettes séparées les unes des autres par des sillons,
- chaque barrette s'étendant radialement vers l'extérieur, sur une hauteur H, à partir d'une surface de fond jusqu'à une face de contact, s'étendant axialement vers l'intérieur à partir d'une face d'extrémité axialement extérieure jusqu'à une face d'extrémité axialement intérieure, et s'étendant circonférentiellement à partir d'une face de fuite jusqu'à une face d'attaque,
- chaque barrette comprenant une première portion de barrette, s'étendant radialement vers l'extérieur à partir de la surface de fond et ayant une hauteur H1, et une deuxième portion de barrette, s'étendant radialement vers l'extérieur à partir de la première portion de barrette jusqu'à la face de contact, ayant une hauteur H2 et ayant un angle d'inclinaison moyen A2 par rapport une direction circonférentielle du pneumatique,
- la première portion de barrette étant constituée par une superposition radiale de N couches C1ᵢ, i variant de 1 à N, ayant chacune une hauteur H1ᵢ, de telle sorte que la somme des hauteurs H1ᵢ est égale à la hauteur H1 de la première portion de barrette, la couche C1₁ s'étendant radialement vers l'extérieur à partir de la surface de fond et la couche C1_{N} s'étendant radialement vers l'extérieur jusqu'à la deuxième portion de barrette,
- chaque couche C1ᵢ ayant un angle d'inclinaison moyen A1ᵢ, par rapport à la direction circonférentielle du pneumatique, strictement inférieur à l'angle d'inclinaison moyen A2 de la deuxième portion de barrette, de telle sorte que la couche C1ᵢ est positionnée en avant de la face d'attaque au voisinage de la face d'extrémité axialement intérieure et en arrière de la face de fuite au voisinage de la face d'extrémité axialement extérieure, -et, lorsque N est strictement supérieur à 1, l'angle A1ⱼ relatif à une couche C1ⱼ, j variant de 1 à N-1, étant strictement inférieur à l'angle A1ⱼ₊ᵢ relatif à la couche C1ⱼ₊ᵢ, de telle sorte que deux couches consécutives (C1ⱼ, C1ⱼ₊₁) sont décalées l'une par rapport à l'autre en rotation d'un angle B1ⱼ = Aⱼ₊₁-Aⱼ.

Selon l'invention, une barrette de bande de roulement de pneumatique pour véhicule agricole est essentiellement constituée par une première portion de barrette radialement intérieure ayant une hauteur H1 et une deuxième portion de barrette radialement extérieure ayant une hauteur H2 et un angle d'inclinaison moyen A2. Par convention, on appelle angle d'inclinaison moyen d'une barrette ou d'une portion de barrette, l'angle formé par la droite passant par les extrémités axiales de la barrette ou de la portion de barrette, c'est-à-dire passant par les points respectivement les plus axialement extérieur et intérieur, avec une direction circonférentielle du pneumatique. L'inclinaison de cette droite par rapport à ladite direction circonférentielle pouvant être mesurée par deux angles supplémentaires, l'angle pris en compte est, par convention, celui qui a la plus petite valeur absolue.

En outre, de façon essentielle, la première portion de barrette est constituée par une superposition, en d'autres termes un empilement, de N couches C1ᵢ, i variant de 1 à N, n'ayant pas nécessairement toutes la même hauteur H1ᵢ. La couche la plus radialement intérieure, en contact avec la surface de fond, est la couche C1₁. La couche la plus radialement extérieure, en contact avec la deuxième portion de barrette, est la couche C1_{N}. Les couches C1ᵢ ont respectivement des angles moyens d'inclinaison A1ᵢ par rapport à la direction circonférentielle du pneumatique, tous inférieurs à l'angle d'inclinaison moyen A2 de la deuxième portion de barrette. En d'autres termes, toutes les couches C1ᵢ, constitutives de la première portion de barrette radialement intérieure, ont des directions moyennes plus proches de la direction circonférentielle que celle de la deuxième portion de barrette radialement extérieure. Ceci implique en particulier que toutes les couches C1ᵢ sont positionnées en avant de la face d'attaque, c'est-à-dire décalées vers l'avant, au voisinage de la face d'extrémité axialement intérieure et en arrière de la face de fuite, c'est-à-dire décalées vers l'arrière au voisinage de la face d'extrémité axialement extérieure, c'est-à-dire qu'elles constituent une protubérance en escalier sur la face avant du nez de barrette et une protubérance en escalier sur la face de fuite de l'aile de barrette. Enfin, les angles moyens d'inclinaison A1ᵢ sont décroissants de la couche C1₁ à la couche C1_{N}, ce qui entraîne un décalage angulaire d'une couche à la suivante et confère une forme en escalier aux protubérances précédemment décrites.

L'épaississement local du nez de barrette et de l'aile de barrette a pour effet technique d'une part d'augmenter la rigidité de barrette dans ces zones, ce qui améliore la capacité de traction du pneumatique, et d'autre part d'assurer une protection du pied de barrette, au voisinage de la surface de fond, vis-à-vis des agressions par les chaumes résiduels. Par ailleurs, la forme en escalier de la première portion radialement intérieure crée une pluralité d'arêtes favorable au débourrage en champ, c'est-à-dire à l'auto-nettoyage de la bande de roulement.

La hauteur H1 de la première portion de barrette est avantageusement strictement inférieure à la hauteur H de la barrette, de préférence au plus égale à 0.5 fois la hauteur H de la barrette. Une hauteur H1 de la première portion de barrette ne peut pas être égale à la hauteur H de la barrette, car la barrette comprend une deuxième portion de barrette radialement extérieure ayant une hauteur H2. Préférentiellement, la hauteur H1 est limitée à la moitié de la hauteur H, pour garantir une souplesse de la barrette adaptée vis-à-vis du comportement du pneumatique et pour avoir un volume inter-barrettes suffisant garantissant une capacité de traction en champ.

La hauteur H1 de la première portion de barrette est encore avantageusement au moins égale à min (6 mm, 0.25*H). L'effet technique de cette caractéristique, plus particulièrement vis-à-vis de la résistance aux agressions par les chaumes et vis-à-vis du débourrage, n'est en effet significatif qu'à partir d'un volume minimal de première portion de barrette.

Selon un mode de réalisation avantageux, la hauteur H1ᵢ de chaque couche C1ᵢ est avantageusement au plus égale à 0.5 fois la hauteur H1 de la première portion de barrette. Cette caractéristique implique que la première portion de barrette comprend au moins deux couches, donc se caractérise par une forme en escalier à au moins deux marches, permettant une déviation progressive des extrémités acérées des chaumes agressant le pied de barrette, favorable à une protection progressive du pied de barrette.

La hauteur H1ᵢ de chaque couche C1ᵢ est encore avantageusement au moins égale à min (3 mm, 0.1*H1). La capacité de résistance aux agressions par les chaumes n'est en effet significative qu'à partir d'une épaisseur minimale de couche élémentaire.

La hauteur H1ᵢ de chaque couche C1ᵢ, i variant de 1 à N, est préférentiellement égale à H1/N. Dans ce mode de réalisation préférentiel, la première portion de barrette est constituée par un empilement de couches de même épaisseur.

L'angle B1ⱼ = A1ⱼ₊₁-A1ⱼ entre deux couches consécutives (C1ⱼ, C1ⱼ₊₁), j variant de 1 à N-1, encore préférentiellement est égal à (A1_{N}-A1₁)/ (N-1). Dans cet autre mode de réalisation préférentiel, la première portion de barrette est constituée par un empilement de couches dans lequel le décalage angulaire entre deux couches successives est constant.

La première portion de barrette est avantageusement constituée par une superposition radiale de N couches C1ᵢ, i variant de 1 à N, avec N au moins égal à 2. Un empilement d'au moins deux couches contribue à une déviation progressive des extrémités acérées des chaumes agressant le pied de barrette et à une protection progressive du pied de barrette, du fait d'un volume de matière plus important en pied de barrette.

La première portion de barrette est encore avantageusement constituée par une superposition radiale de N couches C1ᵢ, i variant de 1 à N, avec N au plus égal à 10. Lorsque N augmente, la capacité de débourrage, ou d'auto-nettoyage, de la barrette augmente, car le nombre d'arêtes en pied de barrette augmente. De plus, la protubérance, constituée par la première portion radiale, a une forme en escalier tendant vers une forme plus continue, favorable à la déviation progressive des extrémités acérées des chaumes agressant le pied de barrette et donc à la protection contre les agressions.

L'angle A1₁ relatif à la couche C1₁, radialement la plus intérieure, est avantageusement au moins égal à A2-45°. Cette caractéristique limite le volume de la première portion radiale, ce qui garantit une souplesse de la barrette adaptée vis-à-vis du comportement du pneumatique et un volume inter-barrettes suffisant garantissant une capacité de traction en champ.

L'angle A1_{N} relatif à la couche C1_{N}, radialement la plus extérieure, est également avantageusement au plus égal à A2-1°. Cette caractéristique garantit un volume minimal de première portion radiale, et par conséquent un effet significatif de l'invention.

L'angle B2=A2-A1_{N} est avantageusement égal à (A1_{N}-A1₁)/ (N-1). Selon un mode de réalisation préférentiel, l'angle B1ⱼ = A1ⱼ₊₁-A1ⱼ, entre deux couches consécutives (C1ⱼ, C1ⱼ₊₁), j variant de 1 à N-1, et l'angle B2=A2-A1_{N}, entre la couche radialement la plus extérieure de la première portion de barrette et la deuxième portion de barrette, sont égaux à (A1_{N}-A1₁)/ (N-1).

Deux couches consécutives (C1ⱼ, C1ⱼ₊₁), j variant de 1 à N-1, sont préférentiellement raccordées entre elles par des congés de raccordement. Sur un plan technologique, compte tenu des contraintes d'usinage des pièces de moulage, les diverses couches sont le plus souvent reliées deux à deux par des congés de raccordement de rayon le plus souvent au moins égal à 3mm.

La bande de roulement est préférentiellement constituée d'une première et d'une seconde rangées de barrettes disposées en chevrons par rapport au plan équatorial du pneumatique. Ce mode de réalisation en chevrons de la bande de roulement est très fréquent pour une bande de roulement de pneumatique pour véhicule agricole.

La présente invention sera mieux comprise à l'aide des figures 1 à 4 décrites ci-après :
- Figure 1 : vue en perspective d'une portion de pneumatique pour véhicule agricole de l'état de la technique,
- Figure 2 : vue en perspective d'une portion de bande de roulement d'un pneumatique pour véhicule agricole selon un premier mode de réalisation de l'invention,
- Figure 3 : vue de dessus d'une portion de bande de roulement d'un pneumatique pour véhicule agricole selon un premier mode de réalisation de l'invention,
- Figure 4: vue de dessus d'une portion de bande de roulement d'un pneumatique pour véhicule agricole selon un deuxième mode de réalisation de l'invention.

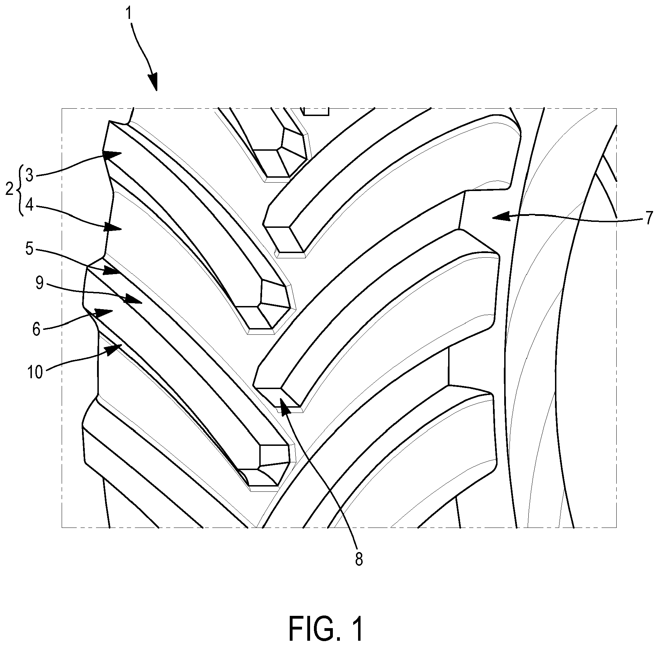

La figure 1 est une vue en perspective d'une portion de pneumatique 1 pour véhicule agricole de l'état de la technique. La bande de roulement 2 du pneumatique est constituée de barrettes 3 séparées les unes des autres par des sillons 4. Chaque barrette 3 s'étend radialement vers l'extérieur, à partir d'une surface de fond 5 jusqu'à une face de contact 6, s'étend axialement vers l'intérieur à partir d'une face d'extrémité axialement extérieure 7 jusqu'à une face d'extrémité axialement intérieure 8, et s'étendant circonférentiellement à partir d'une face de fuite 9 jusqu'à une face d'attaque 10. Dans le cas présent, la bande de roulement est constituée d'une première et d'une seconde rangées de barrettes 3 disposées en chevrons par rapport au plan équatorial du pneumatique.

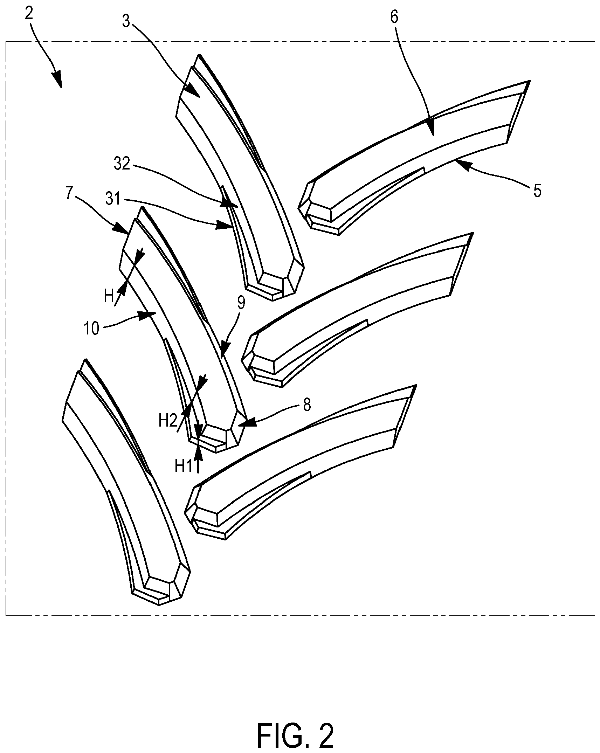

La figure 2 est une vue en perspective d'une portion de bande de roulement 2 d'un pneumatique pour véhicule agricole selon un premier mode de réalisation de l'invention. Chaque barrette 3, ayant une hauteur H, comprend une première portion de barrette 31 radialement intérieure, s'étendant radialement vers l'extérieur à partir de la surface de fond 5 et ayant une hauteur H1, et une deuxième portion de barrette 32, s'étendant radialement vers l'extérieur à partir de la première portion de barrette 31 jusqu'à la face de contact 6, ayant une hauteur H2. Dans ce premier mode de réalisation, la première portion de barrette 31 est constituée par une couche unique C1₁ ayant une hauteur H1₁ égale à H1. L'unique couche C1₁ de la première portion de barrette 31 est positionnée en avant de la face d'attaque 10, c'est-à-dire décalée vers l'avant, au voisinage de la face d'extrémité axialement intérieure 8 et en arrière de la face de fuite 9, c'est-à-dire décalée vers l'arrière, au voisinage de la face d'extrémité axialement extérieure 7.

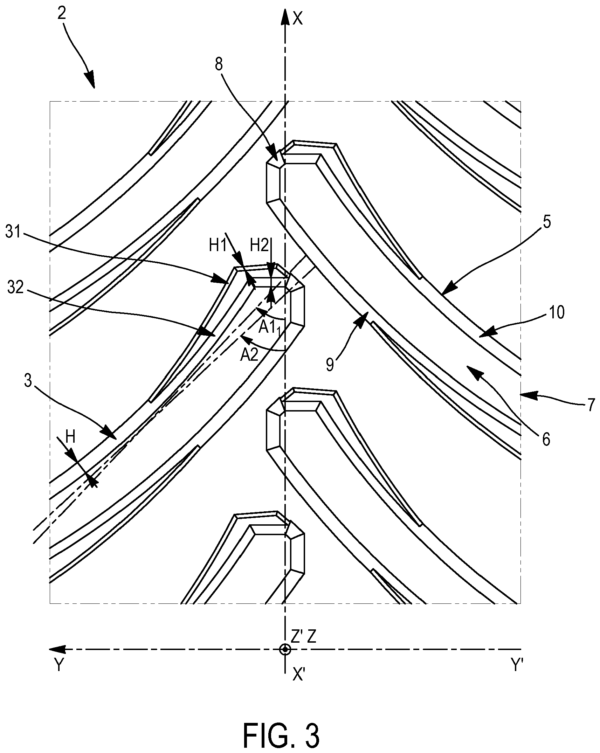

La figure 3 est une vue de dessus d'une portion de bande de roulement 2 d'un pneumatique pour véhicule agricole selon le premier mode de réalisation de l'invention Chaque barrette 3 comprend une première portion de barrette 31, s'étendant radialement vers l'extérieur à partir de la surface de fond 5 et ayant une hauteur H1, et une deuxième portion de barrette 32, s'étendant radialement vers l'extérieur à partir de la première portion de barrette 31 jusqu'à la face de contact 6, ayant une hauteur H2 et ayant un angle d'inclinaison moyen A2 par rapport une direction circonférentielle XX' du pneumatique. Dans ce premier mode de réalisation, la première portion de barrette 31 est constituée par une couche unique C1₁ ayant une hauteur H1₁ égale à H1. L'unique couche C1₁ de la première portion de barrette 31 a un angle d'inclinaison moyen A1₁, par rapport à la direction circonférentielle XX' du pneumatique, strictement inférieur à l'angle d'inclinaison moyen A2 de la deuxième portion de barrette (32), de telle sorte que la couche C1₁ est positionnée en avant de la face d'attaque 10, c'est-à-dire décalée vers l'avant, au voisinage de la face d'extrémité axialement intérieure 8 et en arrière de la face de fuite 9, c'est-à-dire décalée vers l'arrière, au voisinage de la face d'extrémité axialement extérieure 7.

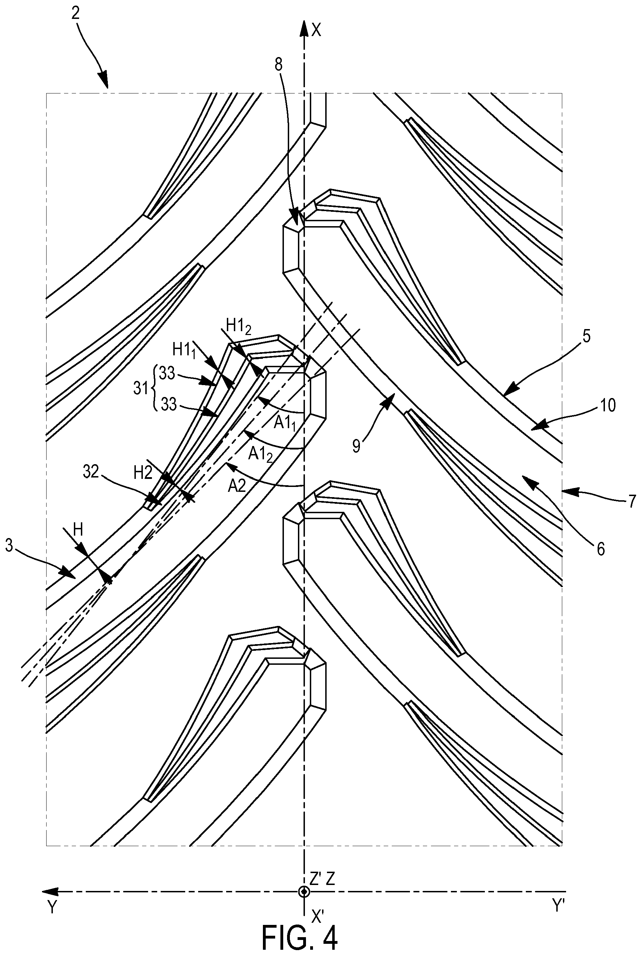

La figure 4 est une vue de dessus d'une portion de bande de roulement 2 d'un pneumatique pour véhicule agricole selon un deuxième mode de réalisation de l'invention. Chaque barrette 3 comprend une première portion de barrette 31, s'étendant radialement vers l'extérieur à partir de la surface de fond 5 et ayant une hauteur H1, et une deuxième portion de barrette 32, s'étendant radialement vers l'extérieur à partir de la première portion de barrette 31 jusqu'à la face de contact 6, ayant une hauteur H2 et ayant un angle d'inclinaison moyen A2 par rapport une direction circonférentielle XX' du pneumatique. La première portion de barrette 31 est constituée par une superposition radiale de 2 couches C1₁ et C1₂ (33, 33), ayant respectivement une hauteur H1₁ et H1₂, de telle sorte que la somme des hauteurs H1₁ et H1₂ est égale à la hauteur H1 de la première portion de barrette 31, la couche C1₁ s'étendant radialement vers l'extérieur à partir de la surface de fond 5 et la couche C1₂ s'étendant radialement vers l'extérieur jusqu'à la deuxième portion de barrette 32. Les couches C1₁ et C1₂ ont respectivement des angles d'inclinaison moyens A1₁ et A1₂, par rapport à la direction circonférentielle XX' du pneumatique, strictement inférieurs à l'angle d'inclinaison moyen A2 de la deuxième portion de barrette 32, de telle sorte que les couches C1₁ et C1₂ sont respectivement positionnées en avant de la face d'attaque 10, c'est-à-dire décalées vers l'avant, au voisinage de la face d'extrémité axialement intérieure 8 et en arrière de la face de fuite 9, c'est-à-dire décalées vers l'arrière, au voisinage de la face d'extrémité axialement extérieure 7. En outre, selon ce deuxième mode de réalisation, l'angle B1₂ = A1₂-A1₁, entre les deux couches consécutives C1₁ et C1₂ de la première portion de barrette 31, et l'angle B2=A2-A1₂, entre la couche C1₂ radialement la plus extérieure de la première portion de barrette 31 et la deuxième portion de barrette 32, sont égaux entre eux.

L'invention a été plus particulièrement mise en œuvre pour un pneumatique agricole de dimension 600/70 R30. Le tableau 1 ci-dessous présente les caractéristiques techniques respectivement d'un exemple 1 du premier mode de réalisation, présenté sur les figures 2 et 3, ainsi que celles d'un exemple 2 du deuxième mode de réalisation, présenté sur la figure 4:

**Tableau 1**

| | Exemple 1 (figures 2 et 3) | Exemples 2 (figure 4) |
|---|---|---|
| Hauteur de barrette H | 65mm | 65mm |
| Hauteur de première portion de barrette H1 | 21mm | 42mm |
| Hauteur de couches H1ᵢ | 21mm pour H1₁ | 21mm pour H1₁ et H1₂ |
| Hauteur de deuxième portion de barrette H2 | 44mm | 23mm |
| Angles d'inclinaison moyens de couches A1ᵢ | 42° | 37°, 42° |
| Angle d'inclinaison moyen de deuxième portion de barrette A2 | 47° | 47° |

Les inventeurs ont pu montrer, sur des tests internes, que les pneumatiques des exemples 1 et 2 permettaient simultanément d'améliorer la traction en champ et de réduire la sensibilité des faces d'attaque des barrettes aux agressions par des chaumes résiduels.

## Revendications

1. Pneumatique (1) pour véhicule agricole comprenant:
- une bande de roulement (2) constituée de barrettes (3) séparées les unes des autres par des sillons (4),
- chaque barrette (3) s'étendant radialement vers l'extérieur, sur une hauteur H, à partir d'une surface de fond (5) jusqu'à une face de contact (6), s'étendant axialement vers l'intérieur à partir d'une face d'extrémité axialement extérieure (7) jusqu'à une face d'extrémité axialement intérieure (8), et s'étendant circonférentiellement à partir d'une face de fuite (9) jusqu'à une face d'attaque (10),
**caractérisé en ce que** chaque barrette (3) comprend une première portion de barrette (31), s'étendant radialement vers l'extérieur à partir de la surface de fond (5) et ayant une hauteur H1, et une deuxième portion de barrette (32), s'étendant radialement vers l'extérieur à partir de la première portion de barrette (31) jusqu'à la face de contact (6), ayant une hauteur H2 et ayant un angle d'inclinaison moyen A2 par rapport une direction circonférentielle (XX') du pneumatique, **en ce que** la première portion de barrette (31) est constituée par une superposition radiale de N couches C1ᵢ (33), i variant de 1 à N, ayant chacune une hauteur H1ᵢ, de telle sorte que la somme des hauteurs H1ᵢ est égale à la hauteur H1 de la première portion de barrette (31), la couche C1₁ s'étendant radialement vers l'extérieur à partir de la surface de fond (5) et la couche C1_{N} s'étendant radialement vers l'extérieur jusqu'à la deuxième portion de barrette (32), **en ce que** chaque couche C1ᵢ a un angle d'inclinaison moyen A1ᵢ, par rapport à la direction circonférentielle (XX') du pneumatique, strictement inférieur à l'angle d'inclinaison moyen A2 de la deuxième portion de barrette (32), de telle sorte que la couche C1ᵢ est positionnée en avant de la face d'attaque (10) au voisinage de la face d'extrémité axialement intérieure (8), et en arrière de la face de fuite (9) au voisinage de la face d'extrémité axialement extérieure (7), **et en ce que**, lorsque N est strictement supérieur à 1, l'angle A1ⱼ relatif à une couche C1ⱼ, j variant de 1 à N-1, est strictement inférieur à l'angle A1ⱼ₊ᵢ relatif à la couche C1ⱼ₊ᵢ, de telle sorte que deux couches consécutives (C1ⱼ, C1ⱼ₊₁) sont décalées l'une par rapport à l'autre en rotation d'un angle B1ⱼ = A1ⱼ₊₁-A1ⱼ.

2. Pneumatique (1) selon la revendication 1, **dans lequel** la hauteur H1 de la première portion de barrette (31) est strictement inférieure à la hauteur H de la barrette (3), de préférence au plus égale à 0.5 fois la hauteur H de la barrette (3).

3. Pneumatique (1) selon l'une des revendications 1 ou 2, **dans lequel** la hauteur H1 de la première portion de barrette (31) est au moins égale à min (6 mm, 0.25*H).

4. Pneumatique (1) selon l'une quelconque des revendications 1 à 3, **dans lequel** la hauteur H1ᵢ de chaque couche C1ᵢ (33) est au plus égale à 0.5 fois la hauteur H1 de la première portion de barrette (31).

5. Pneumatique (1) selon l'une quelconque des revendications 1 à 4, **dans lequel** la hauteur H1ᵢ de chaque couche C1ᵢ (33) est au moins égale à min (3 mm, 0.1*H1).

6. Pneumatique (1) selon l'une quelconque des revendications 1 à 5, **dans lequel** la hauteur H1ᵢ de chaque couche C1ᵢ (33), i variant de 1 à N, est égale à H1/N.

7. Pneumatique (1) selon l'une quelconque des revendications 1 à 6, **dans lequel** l'angle B1ⱼ = A1ⱼ₊₁-A1ⱼ entre deux couches consécutives (C1ⱼ, C1ⱼ₊₁), j variant de 1 à N-1, est égal à (A1_{N}-Al₁)/(N-1).

8. Pneumatique (1) selon l'une quelconque des revendications 1 à 7, **dans lequel** la première portion de barrette (31) est constituée par une superposition radiale de N couches C1ᵢ (33), i variant de 1 à N, avec N au moins égal à 2.

9. Pneumatique (1) selon l'une quelconque des revendications 1 à 8, **dans lequel** la première portion de barrette (31) est constituée par une superposition radiale de N couches C1ᵢ (33), i variant de 1 à N, avec N au plus égal à 10.

10. Pneumatique (1) selon l'une quelconque des revendications 1 à 9, **dans lequel** l'angle A1₁ relatif à la couche C1₁, radialement la plus intérieure, est au moins égal à A2-45°.

11. Pneumatique (1) selon l'une quelconque des revendications 1 à 10, **dans lequel** l'angle A1_{N} relatif à la couche C1_{N}, radialement la plus extérieure, est au plus égal à A2-1°.

12. Pneumatique (1) selon l'une quelconque des revendications 1 à 11, **dans lequel** l'angle B2=A2-A1_{N} est égal à (A1_{N}-A1₁)/(N-1).

13. Pneumatique (1) selon l'une quelconque des revendications 1 à 12, **dans lequel** deux couches consécutives (C1ⱼ, C1ⱼ₊₁), j variant de 1 à N-1, sont raccordées entre elles par des congés de raccordement.

14. Pneumatique (1) l'une quelconque des revendications 1 à 13, **dans lequel** la bande de roulement est constituée d'une première et d'une seconde rangées de barrettes (3) disposées en chevrons par rapport au plan équatorial (P) du pneumatique.

## Patentansprüche

1. Reifen (1) für ein landwirtschaftliches Fahrzeug, umfassend:
- einen Laufstreifen (2), der von Stollen (3) gebildet ist, die durch Furchen (4) voneinander getrennt sind,
- wobei sich jeder Stollen (3) radial nach außen über eine Höhe H von einer Bodenfläche (5) bis zu einer Kontaktfläche (6) erstreckt, sich axial nach innen von einer axial äußeren Endfläche (7) bis zu einer axial inneren Endfläche (8) erstreckt und sich in Umfangsrichtung von einer hinteren Fläche (9) bis zu einer vorderen Fläche (10) erstreckt,
**dadurch gekennzeichnet, dass** jeder Stollen (3) einen ersten Stollenabschnitt (31) umfasst, der sich radial nach außen von der Bodenfläche (5) erstreckt und eine Höhe H1 aufweist, und einen zweiten Stollenabschnitt (32), der sich radial nach außen vom ersten Stollenabschnitt (31) bis zu der Kontaktfläche (6) erstreckt, eine Höhe H2 aufweist und einen mittleren Neigungswinkel A2 bezogen auf eine Umfangsrichtung (XX') des Reifens aufweist, dadurch, dass der erste Abschnitt des Stollens (31) von einer radialen Überlagerung von N Schichten C1ᵢ (33) gebildet ist, wobei i von 1 bis N variiert, jeweils aufweisend eine Höhe H1ᵢ, so dass die Summe der Höhen H1ᵢ gleich der Höhe H1 des ersten Stollenabschnitts (31) ist, wobei sich die Schicht C1ᵢ radial nach außen von der Bodenfläche (5) erstreckt und sich die Schicht C1_{N} radial nach außen bis zum zweiten Stollenabschnitt (32) erstreckt, dadurch, dass jede Schicht C1ᵢ einen mittleren Neigungswinkel A1ᵢ bezogen auf die Umfangsrichtung (XX') des Reifens aufweist, der streng kleiner als der mittlere Neigungswinkel A2 des zweiten Stollenabschnitts (32) ist, so dass die Schicht C1ᵢ vor der vorderen Fläche (10) der axial inneren Endfläche (8) benachbart und hinter der hinteren Fläche (9) der axial äußeren Endfläche (7) benachbart positioniert ist, und dadurch, dass, wenn N streng größer als 1 ist, der Winkel A1ⱼ in Bezug auf eine Schicht C1ⱼ, wobei j von 1 bis N - 1 variiert, streng kleiner als der Winkel A1_{j + 1} in Bezug auf die Schicht C1_{j + 1} ist, so dass zwei aufeinanderfolgende Schichten (C1ⱼ, C1_{j + 1}) in Drehung um einen Winkel B1ⱼ = A1_{j + 1} - A1ⱼ voneinander versetzt sind.

2. Reifen (1) nach Anspruch 1, wobei die Höhe H1 des ersten Stollenabschnitts (31) streng kleiner als die Höhe H des Stollens (3) ist, vorzugsweise höchstens gleich dem 0,5-fachen der Höhe H des Stollens (3).

3. Reifen (1) nach einem der Ansprüche 1 oder 2, wobei die Höhe H1 des ersten Stollenabschnitts (31) mindestens gleich min (6 mm, 0,25*H) ist.

4. Reifen (1) nach einem der Ansprüche 1 bis 3, wobei die Höhe H1ᵢ jeder Schicht C1ᵢ (33) höchstens gleich dem 0,5-fachen der Höhe H1 des ersten Stollenabschnitts (31) ist.

5. Reifen (1) nach einem der Ansprüche 1 bis 4, wobei die Höhe H1ᵢ jeder Schicht C1ᵢ (33) mindestens gleich min (3 mm, 0,1*H1) ist.

6. Reifen (1) nach einem der Ansprüche 1 bis 5, wobei die Höhe H1ᵢ jeder Schicht C1ᵢ (33), wobei i von 1 bis N variiert, gleich H1/N ist.

7. Reifen (1) nach einem der Ansprüche 1 bis 6, wobei der Winkel B1ⱼ = A1ⱼ₊₁ - A1ⱼ zwischen zwei aufeinanderfolgenden Schichten (C1ⱼ, C1_{j + 1}), wobei j von 1 bis N - 1 variiert, gleich (A1_{N} - A1₁) / (N-1) ist.

8. Reifen (1) nach einem der Ansprüche 1 bis 7, wobei der erste Stollenabschnitt (31) von einer radialen Überlagerung von N Schichten C1ᵢ (33) gebildet ist, wobei i von 1 bis N variiert, wobei N mindestens gleich 2 ist.

9. Reifen (1) nach einem der Ansprüche 1 bis 8, wobei der erste Stollenabschnitt (31) von einer radialen Überlagerung von N Schichten C1ᵢ (33) gebildet ist, wobei i von 1 bis N variiert, wobei N höchstens gleich 10 ist.

10. Reifen (1) nach einem der Ansprüche 1 bis 9, wobei der Winkel A1₁ in Bezug auf die Schicht C1₁, die radial die innerste ist, mindestens gleich A2 - 45° ist.

11. Reifen (1) nach einem der Ansprüche 1 bis 10, wobei der Winkel A1_{N} in Bezug auf die Schicht C1_{N}, die radial die äußerste ist, höchstens gleich A2 - 1° ist.

12. Reifen (1) nach einem der Ansprüche 1 bis 11, wobei der Winkel B2 = A2 - A1_{N} gleich (A1_{N} - A1₁) / (N - 1) ist.

13. Reifen (1) nach einem der Ansprüche 1 bis 12, wobei zwei aufeinanderfolgende Schichten (C1ⱼ, C1_{j + 1}), wobei j von 1 bis N - l variiert, durch Verbindungskehlen miteinander verbunden sind.

14. Reifen (1) einem der Ansprüche 1 bis 13, wobei der Laufstreifen von einer ersten und einer zweiten Reihe von Stollen (3) gebildet ist, die in einem Fischgrätmuster bezogen auf die Äquatorialebene (P) des Reifens positioniert sind.

## Claims

1. Tyre (1) for an agricultural vehicle, comprising:
- a tread (2) made up of lugs (3) that are separated from one another by grooves (4),
- each lug (3) extending radially outwards, over a height H, from a bottom surface (5) to a contact face (6), extending axially inwards from an axially outer end face (7) to an axially inner end face (8), and extending circumferentially from a trailing face (9) to a leading face (10),
**characterized in that** each lug (3) comprises a first lug portion (31), extending radially outwards from the bottom surface (5) and having a height H1, and a second lug portion (32), extending radially outwards from the first lug portion (31) to the contact face (6), having a height H2 and having a mean angle of inclination A2 with respect to a circumferential direction (XX') of the tyre, **in that** the first lug portion (31) is made up of a radial superposition of N layers C1ᵢ (33), where i varies from 1 to N, each having a height H1ᵢ, such that the sum of the heights H1ᵢ is equal to the height H1 of the first lug portion (31), the layer C1₁ extending radially outwards from the bottom surface (5) and the layer C1_{N} extending radially outwards to the second lug portion (32), **in that** each layer C1ᵢ has a mean angle of inclination A1ᵢ, with respect to the circumferential direction (XX') of the tyre, that is strictly less than the mean angle of inclination A2 of the second lug portion (32), such that the layer C1ᵢ is positioned in front of the leading face (10) in the vicinity of the axially inner end face (8), and behind the trailing face (9) in the vicinity of the axially outer end face (7), **and in that**, when N is strictly greater than 1, the angle A1ⱼ relative to a layer C1ⱼ, where j varies from 1 to N-1, is strictly less than the angle A1ⱼ₊₁ relative to the layer C1ⱼ₊₁, such that two consecutive layers (C1ⱼ, C1ⱼ₊₁) are rotationally offset with respect to one another by an angle B1ⱼ = A1ⱼ₊₁-A1ⱼ.

2. Tyre (1) according to Claim 1, **wherein** the height H1 of the first lug portion (31) is strictly less than the height H of the lug (3), preferably at most equal to 0.5 times the height H of the lug (3).

3. Tyre (1) according to either of Claims 1 and 2, **wherein** the height H1 of the first lug portion (31) is at least equal to min (6 mm, 0.25*H).

4. Tyre (1) according to any one of Claims 1 to 3, **wherein** the height H1ᵢ of each layer C1ᵢ (33) is at most equal to 0.5 times the height H1 of the first lug portion (31).

5. Tyre (1) according to any one of Claims 1 to 4, **wherein** the height H1ᵢ of each layer C1ᵢ (33) is at least equal to min (3 mm, 0.1*H1).

6. Tyre (1) according to any one of Claims 1 to 5, **wherein** the height H1ᵢ of each layer C1ᵢ (33), where i varies from 1 to N, is equal to H1/N.

7. Tyre (1) according to any one of Claims 1 to 6, **wherein** the angle B1ⱼ = A1ⱼ₊₁-A1ⱼ between two consecutive layers (C1ⱼ, C1ⱼ₊₁), where j varies from 1 to N-1, is equal to (A1_{N}-A1₁)/(N-1).

8. Tyre (1) according to any one of Claims 1 to 7, **wherein** the first lug portion (31) is made up of a radial superposition of N layers C1ᵢ (33), where i varies from 1 to N, with N at least equal to 2.

9. Tyre (1) according to any one of Claims 1 to 8, **wherein** the first lug portion (31) is made up of a radial superposition of N layers C1ᵢ (33), where i varies from 1 to N, with N at most equal to 10.

10. Tyre (1) according to any one of Claims 1 to 9, **wherein** the angle A1₁ relative to the layer C1₁, which is radially innermost, is at least equal to A2-45°.

11. Tyre (1) according to any one of Claims 1 to 10, **wherein** the angle A1_{N} relative to the layer C1_{N}, which is radially outermost, is at most equal to A2-1°.

12. Tyre (1) according to any one of Claims 1 to 11, **wherein** the angle B2=A2-A1_{N} is equal to (A1_{N}-A1₁)/(N-1).

13. Tyre (1) according to any one of Claims 1 to 12, **wherein** two consecutive layers (C1ⱼ, C1ⱼ₊₁), where j varies from 1 to N-1, are joined together by fillets.

14. Tyre (1) according to any one of Claims 1 to 13, **wherein** the tread is made up of a first and a second row of lugs (3) disposed in chevrons with respect to the equatorial plane (P) of the tyre.
